(19) Europäisches Patentamt
European Patent Office
Office européen des brevets

(11) **EP 3 024 270 B1**

(12) **EUROPEAN PATENT SPECIFICATION**

(45) Date of publication and mention
of the grant of the patent:
**27.12.2017 Bulletin 2017/52**

(21) Application number: **13893975.6**

(22) Date of filing: **18.09.2013**

(51) Int Cl.:
*H04W 36/22* (2009.01)      *H04W 28/08* (2009.01)
*H04W 16/32* (2009.01)

(86) International application number:
**PCT/CN2013/083745**

(87) International publication number:
**WO 2015/039295 (26.03.2015 Gazette 2015/12)**

(54) **TIME DOMAIN INTERFERENCE COORDINATION METHOD AND NETWORK DEVICE**

ZEITBEREICHS-INTERFERENZKOORDINATIONSVERFAHREN UND
NETZWERKVORRICHTUNG

PROCÉDÉ DE COORDINATION D'INTERFÉRENCES DE DOMAINE TEMPOREL ET DISPOSITIF
DE RÉSEAU

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**25.05.2016 Bulletin 2016/21**

(73) Proprietor: **Huawei Technologies Co., Ltd.
Longgang District
Shenzhen, Guangdong 518129 (CN)**

(72) Inventors:
• **WANG, Zhao
Shenzhen
Guangdong 518129 (CN)**
• **ZHOU, Xun
Shenzhen
Guangdong 518129 (CN)**

• **QIAN, Ying
Shenzhen
Guangdong 518129 (CN)**
• **XIA, Weijuan
Shenzhen
Guangdong 518129 (CN)**

(74) Representative: **Gill Jennings & Every LLP
The Broadgate Tower
20 Primrose Street
London EC2A 2ES (GB)**

(56) References cited:
CN-A- 101 977 403      CN-A- 102 938 894
CN-A- 103 096 334      CN-A- 103 155 648
US-A1- 2013 044 600      US-A1- 2013 065 599
US-A1- 2013 084 865

## Description

## TECHNICAL FIELD

The present invention relates to the field of communications technologies, and in particular, to a time-domain interference coordination method and a network device.

## BACKGROUND

A heterogeneous network (Heterogeneous Network, HetNet) is a network type of Long Term Evolution (Long Term Evolution, LTE) networks, and a co-coverage heterogeneous system is formed by deploying a low-powered micro base station within a coverage area of a macro base station. A micro base station is mainly deployed in a weak coverage area or a hotspot area of a macro base station, and a micro base station deployed in a hotspot area of a macro base station is mainly used to absorb traffic and improve network capacity. In an actual application, a coverage area of a micro base station is related to signal strength of a macro base station that is in a traffic hotspot area in which the micro base station is located. For example, when a traffic hotspot area is distributed near a central location of a coverage area of a macro base station, a signal of the macro base station is strong, that is, for user equipment (User Equipment, UE) in the area, reference signal received power (Reference Signal Received Power, RSRP) of the macro base station is relatively high. In this case, to enable a micro base station to adsorb UE in the area, RSRP of the micro base station needs to reach or exceed the RSRP of the macro base station. However, in this case, a coverage area of the micro base station is relatively small, few UEs are adsorbed, and load of the macro base station and the micro base station is not balanced, which result in a phenomenon that the load of the micro base station is low and user experience is excellent, and the load of the macro base station is high and user experience is poor.

Under a precondition that transmit power of the micro base station is not changed, to change the foregoing phenomenon, the coverage area of the micro base station is currently expanded mainly by configuring a switching parameter of the micro base station, so that the micro base station adsorbs more UEs. For example, an offset value of a cell range expansion (Cell Range Expansion, CRE) parameter of the micro base station is configured, to reduce a threshold according to which UE switches to the micro base station. A greater offset value indicates that an expanded coverage area of the micro base station is larger, and the micro base station adsorbs more UEs. However, when a relatively large offset value is configured for the micro base station, UE within a CRE area is seriously interfered by the macro base station. To resolve an interference problem, currently, some subframes of the macro base station are set to almost blank subframes (Almost Blank Subframe, ABS), and in the ABSs, the macro base station sends neither a user-specific physical downlink control channel (Physical Downlink Control Channel, PDCCH) nor a user-specific physical downlink shared channel (Physical Downlink Shared Channel, PDSCH), so that only interference by a pilot of the macro base station exists in corresponding subframes of the micro base station, and the micro base station can schedule, on the subframes, UE within a cell range expansion area.

An expanded coverage area of a micro base station can be currently adjusted by configuring an offset value of a CRE, and it is avoided, by setting an ABS of a macro base station, that UE is interfered by a PDCCH and a PDSCH; however, as user equipment moves and a service of user equipment changes on a network, when a macro cell on the network is overloaded, an ABS and a CRE are not simultaneously adjusted in time, and as a result, problems that load of the macro cell and a micro cell is unbalanced, and a system throughput rate is reduced are easily caused.

US 2013/0084865 A1 describes a technique for using almost blank subframes in wireless communication systems.

## SUMMARY

The present invention provides a time-domain interference coordination method, which is used to: when load of a macro cell is greater than or equal to a load threshold, configure a first ABS subframe proportion parameter for the macro cell and configure at least one CRE parameter for the macro cell and at least one micro cell, to expand a coverage area of the micro cell, so that the at least one micro cell adsorbs some UEs that belong to the macro cell, and the load of the macro cell is reduced.

Aspects of the present invention are provided in the claims.

According to the method of the present invention, when load of a macro cell is greater than or equal to a load threshold, a coverage area of a micro cell is expanded by configuring a first ABS subframe proportion parameter for the macro cell, and configuring at least one CRE parameter for the macro cell and at least one micro cell, so that the at least one micro cell adsorbs some user equipments UE that belong to the macro cell, and the load of the macro cell is reduced, thereby balancing load of the macro cell and the at least one micro cell, and improving a throughput of a network edge user.

## BRIEF DESCRIPTION OF DRAWINGS

To describe the technical solutions in the embodiments of the present invention more clearly, the following briefly introduces the accompanying drawings required for describing the embodiments. Apparently, the accompanying drawings in the following description show merely some embodiments of the present invention, and a person of ordinary skill in the art may still derive other drawings from these accompanying drawings without creative efforts.

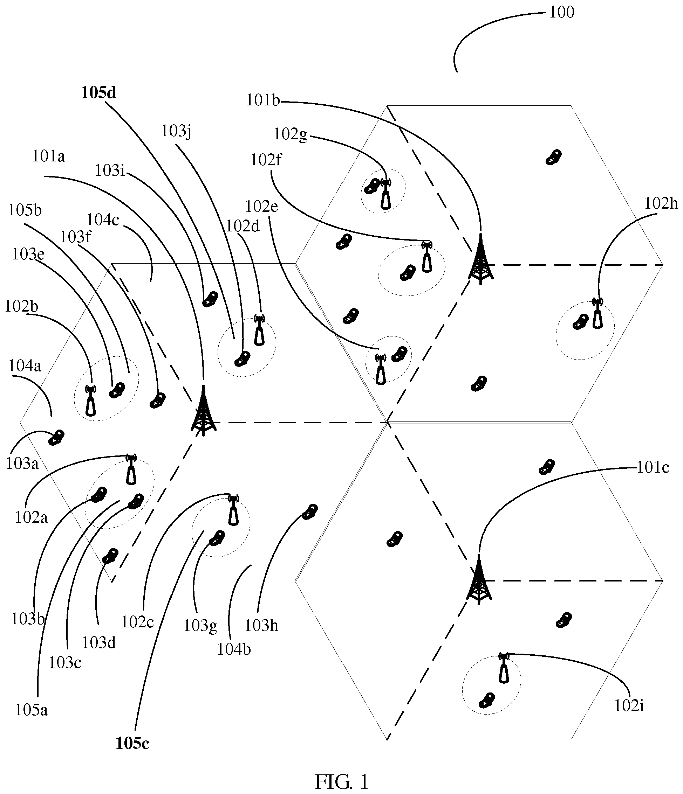

FIG. 1 is a schematic diagram of a wireless communications network according to an manner of the first aspect,

the first acquiring unit being configured to traverse the K ABS subframe proportion parameters and the L CRE parameters, to acquire a maximum value of values of a first utility function of downlink scheduling rates of the N UEs, and acquire the first ABS subframe proportion parameter and the at least one CRE parameter according to the maximum value of the values of the first utility function includes:

the first acquiring unit being configured to traverse the K ABS subframe proportion parameters and the L CRE parameters, to acquire the maximum value of the values of the first utility function of the downlink scheduling rates of the N UEs, where the first utility function includes: $\sum_{i \in N} \log(r_i)$, where i indicates a sequence number of UE, i is an integer greater than or equal to 1 and less than or equal to N, and $r_i$ indicates a downlink scheduling rate of the $i^{th}$ UE, and acquire the first ABS subframe proportion parameter and the at least one CRE parameter according to the maximum value of the values of the first utility function.

With reference to the first aspect of the present invention or any one of the first to fourth manners of the first aspect, in a fifth manner of the first aspect, the first acquiring unit is configured to:

after the first configuration unit configures the first ABS subframe proportion parameter for the macro cell, and configures the at least one CRE parameter for the macro cell and the at least one micro cell, traverse M ABS subframe proportion parameters, to acquire a maximum value of a second utility function of downlink scheduling priorities of Y UEs, where the Y UEs are UEs in the macro cell and the at least one micro cell, M is an integer greater than or equal to 1, and Y is an integer greater than or equal to 1, and acquire, according to the maximum value of values of the second utility function, a second ABS subframe proportion parameter that corresponds to the maximum value of the values of the second utility function; and the first configuration unit is further configured to: after the first acquiring unit acquires the second ABS subframe proportion parameter, configure the second ABS subframe proportion parameter for the macro cell.

With reference to the fifth manner of the first aspect of the present invention, in a sixth manner of the first aspect,
the first acquiring unit being configured to:

after the first configuration unit configures the first ABS subframe proportion parameter for the macro cell, and configures the at least one CRE parameter for the macro cell and the at least one micro cell, traverse M ABS subframe proportion parameters, to acquire a maximum value of a second utility function of downlink scheduling priorities of Y UEs, and acquire, according to the maximum value of values of the second utility function, a second ABS subframe proportion parameter that corresponds to the maximum value of the values of the second utility function includes:

the first acquiring unit being configured to:

after the first configuration unit configures the first ABS subframe proportion parameter for the macro cell, and configures the at least one CRE parameter for the macro cell and the at least one micro cell, traverse the M ABS subframe proportion parameters, to acquire the maximum value of the second utility function of the downlink scheduling priorities of the Y UEs, where the second utility function includes: $\sum_{l \in Y} \Pr_l$, where l indicates a sequence number of UE, l is an integer greater than or equal to 1 and less than or equal to Y, and $\Pr_l$ indicates a downlink scheduling priority of the $1^{th}$ UE, and acquire, according to the maximum value of the values of the second utility function, the second ABS subframe proportion parameter that corresponds to the maximum value of the values of the second utility function.

With reference to the first aspect of the present invention or any one of the first to sixth manners of the first aspect, in a seventh manner of the first aspect, the first acquiring unit being configured to: when load of a macro cell is greater than or equal to a load threshold, or when a timer reaches a system preset time, acquire a first almost blank subframe ABS subframe proportion parameter of the macro cell and at least one cell range expansion CRE parameter includes:

the first acquiring unit being configured to: when the load of the macro cell is greater than or equal to the load threshold, or when the timer reaches the system preset time, acquire the first almost blank subframe ABS subframe proportion parameter and the at least one cell range expansion CRE parameter, where the load of the macro cell includes: average RB utilization of the macro cell or a quantity of users of the macro cell; and

the load of the macro cell being greater than or equal to the load threshold includes: the average RB utilization of the macro cell being greater than or equal to an average RB utilization threshold, or the quantity of users of the macro cell being greater than or equal to a user quantity threshold.

With reference to the first aspect of the present invention or any one of the first to seventh manners of the first aspect, in an eighth manner of the first aspect, the network device includes: a macro base station to which the macro cell belongs, or a centralized controller, where the centralized controller is configured to control the macro base station and a micro base station to which the micro cell belongs.

A second aspect of the present invention provides a time-domain interference coordination method, including:

when load of a macro cell is greater than or equal to a load threshold, or when a timer reaches a system preset time, acquiring, by a network device, a first almost blank subframe ABS subframe proportion parameter of the macro cell and at least one cell range expansion CRE parameter, where the at least one cell range expansion CRE parameter is a CRE parameter for the macro cell and at least one micro cell, and the at least one micro cell is a micro cell within a coverage area of the macro cell; and
configuring, by the network device, the first ABS subframe proportion parameter for the macro cell, and configuring the at least one CRE parameter for the macro cell and the at least one micro cell.

With reference to the second aspect of the present invention, in a first manner of the second aspect, before the configuring, by the network device, the first ABS subframe proportion parameter for the macro cell, and configuring the at least one CRE parameter for the macro cell and the at least one micro cell, the method further includes:

acquiring, by the network device, a signal to interference plus noise ratio SINR obtained after first user equipment UE is adsorbed into a first micro cell, where the first micro cell belongs to the at least one micro cell, the first UE belongs to N UEs in the macro cell and the at least one micro cell, and N is an integer greater than or equal to 1; and
if the SINR is less than a demodulation threshold that exists when a modulation and coding scheme MCS of the first UE is zeroth order, configuring, by the network device, an offset value of a range expansion RE parameter of the first UE as 0 dB.

With reference to the second aspect of the present invention or the first manner of the second aspect, in a second manner of the second aspect, the acquiring, by a network device, a first ABS subframe proportion parameter of the macro cell and at least one CRE parameter includes:

traversing, by the network device, K ABS subframe proportion parameters and L CRE parameters, to acquire the first ABS subframe proportion parameter and the at least one CRE parameter that correspond to maximum system capacity, where the system capacity is total capacity of the N UEs, K is an integer greater than or equal to 1, and L is an integer greater than or equal to 1.

With reference to the second manner of the second aspect of the present invention, in a third manner of the second aspect,
the traversing, by the network device, K ABS subframe proportion parameters and L CRE parameters, to acquire the first ABS subframe proportion parameter and the at least one CRE parameter that correspond to maximum system capacity includes:

traversing the K ABS subframe proportion parameters and the L CRE parameters, to acquire a maximum value of values of a first utility function of downlink scheduling rates of the N UEs; and
acquiring the first ABS subframe proportion parameter and the at least one CRE parameter according to the maximum value of the values of the first utility function.

With reference to the third manner of the second aspect of the present invention, in a fourth manner of the second aspect,
the first utility function includes:

$\sum_{i \in N} \log(r_i)$, where i indicates a sequence number of UE, i is an integer greater than or equal to 1 and less than or equal to N, and $r_i$ indicates a downlink scheduling rate of the i$^{th}$ UE.

With reference to the second aspect of the present invention or any one of the first to fourth manners of the second aspect, in a fifth manner of the second aspect,
after the configuring, by the network device, the first ABS subframe proportion parameter for the macro cell, and configuring the at least one CRE parameter for the macro cell and the at least one micro cell, the method further includes: traversing, by the network device, M ABS subframe proportion parameters, to acquire a maximum value of a second utility function of downlink scheduling priorities of Y UEs, where the Y UEs are UEs in the macro cell and the at least one micro cell, M is an integer greater than or equal to 1, and Y is an integer greater than or equal to 1;

acquiring, by the network device according to the maximum value of values of the second utility function, a second ABS subframe proportion parameter that corresponds to the maximum value of the values of the second utility function; and

configuring, by the network device, the second ABS subframe proportion parameter for the macro cell.

With reference to the fifth manner of the second aspect of the present invention, in a sixth manner of the second aspect,

the second utility function includes:

$$\sum_{l \in Y} \mathrm{Pr}_l$$ , where $l$ indicates a sequence number of UE, $l$ is an integer greater than or equal to 1 and less than or equal to Y, and $\mathrm{Pr}_l$ indicates a downlink scheduling priority of the $l^{th}$ UE.

With reference to the second aspect of the present invention or any one of the first to sixth manners of the second aspect, in a seventh manner of the second aspect,

the load of the macro cell includes:

average RB utilization of the macro cell or a quantity of users of the macro cell; and

the load of the macro cell being greater than or equal to the load threshold includes: the average RB utilization of the macro cell being greater than or equal to an average RB utilization threshold, or the quantity of users of the macro cell being greater than or equal to a user quantity threshold.

With reference to the second aspect of the present invention or the first to seventh manners of the second aspect, in an eighth manner of the second aspect, the network device includes: a macro base station to which the macro cell belongs, or a centralized controller, where the centralized controller is configured to control the macro base station and a micro base station to which the micro cell belongs.

A third aspect of the present invention provides a network device, including:

a processor, and a memory connected to the processor, where the processor is configured to: when load of a macro cell is greater than or equal to a load threshold, or when a timer reaches a system preset time, acquire a first almost blank subframe ABS subframe proportion parameter of the macro cell and at least one cell range expansion CRE parameter from the memory, where the at least one cell range expansion CRE parameter is a CRE parameter for the macro cell and at least one micro cell, and the at least one micro cell is a micro cell within a coverage area of the macro cell; and is configured to: after the first ABS subframe proportion parameter is acquired, configure the first ABS subframe proportion parameter for the macro cell, and configure the at least one CRE parameter for the macro cell and the at least one micro cell.

With reference to the third aspect of the present invention, in a first manner of the third aspect,

the processor is configured to: before the first ABS subframe proportion parameter is configured for the macro cell, and the at least one CRE parameter is configured for the macro cell and the at least one micro cell, acquire a signal to interference plus noise ratio SINR obtained after first user equipment UE is adsorbed into a first micro cell, where the first micro cell belongs to the at least one micro cell, the first UE belongs to N UEs in the macro cell and the at least one micro cell, and N is an integer greater than or equal to 1; and is configured to: if the acquired SINR is less than a demodulation threshold that exists when a modulation and coding scheme MCS of the first UE is zeroth order, configure an offset value of a range expansion RE parameter of the first UE as 0 dB.

With reference to the third aspect of the present invention or the first manner of the third aspect, in a second manner of the third aspect,

the processor being configured to acquire a first almost blank subframe ABS subframe proportion parameter of the macro cell and at least one cell range expansion CRE parameter from the memory includes:

the processor being configured to traverse K ABS subframe proportion parameters and L CRE parameters that are stored in the memory, to acquire the first ABS subframe proportion parameter and the at least one CRE parameter that correspond to maximum system capacity, where the system capacity is total capacity of the N UEs, K is an integer greater than or equal to 1, and L is an integer greater than or equal to 1.

With reference to the second manner of the third aspect of the present invention, in a third manner of the third aspect,

the processor being configured to traverse K ABS subframe proportion parameters and L CRE parameters that are stored in the memory, to acquire the first ABS subframe proportion parameter and the at least one CRE parameter that correspond to maximum system capacity includes:

the processor being configured to traverse the K ABS subframe proportion parameters and the L CRE parameters that are stored in the memory, to acquire a maximum value of values of a first utility function of downlink scheduling rates of the N UEs; and

acquire the first ABS subframe proportion parameter and the at least one CRE parameter according to the maximum value of the values of the first utility function.

With reference to the third manner of the third aspect of the present invention, in a fourth manner of the third aspect,
the processor being configured to traverse the K ABS subframe proportion parameters and the L CRE parameters, to acquire a maximum value of values of a first utility function of downlink scheduling rates of the N UEs, and acquire the first ABS subframe proportion parameter and the at least one CRE parameter according to the maximum value of the values of the first utility function includes:
the processor being configured to traverse the K ABS subframe proportion parameters and the L CRE parameters, to acquire the maximum value of the values of the first utility function of the downlink scheduling rates of the N UEs, where the first utility function includes:

$$\sum_{i \in N} \log(r_i),$$ where i indicates a sequence number of UE, i is an integer greater than or equal to 1 and less than or equal to N, and $r_i$ indicates a downlink scheduling rate of the ith UE, and acquire the first ABS subframe proportion parameter and the at least one CRE parameter according to the maximum value of the values of the first utility function.

With reference to the third aspect of the present invention or any one of the first to fourth manners of the third aspect, in a fifth manner of the third aspect,
the processer is further configured to:

after the first ABS subframe proportion parameter is configured for the macro cell, and the at least one CRE parameter is configured for the macro cell and the at least one micro cell, traverse M ABS subframe proportion parameters stored in the memory, to acquire a maximum value of a second utility function of downlink scheduling priorities of Y UEs, where the Y UEs are UEs in the macro cell and the at least one micro cell, M is an integer greater than or equal to 1, and Y is an integer greater than or equal to 1; and acquire, according to the maximum value of values of the second utility function, a second ABS subframe proportion parameter that corresponds to the maximum value of the values of the second utility function; and is configured to: after the second ABS subframe proportion parameter is acquired, configure the second ABS subframe proportion parameter for the macro cell.

With reference to the fifth manner of the third aspect of the present invention, in a sixth manner of the third aspect,
the processer being configured to:

after the first ABS subframe proportion parameter is configured for the macro cell, and the at least one CRE parameter is configured for the macro cell and the at least one micro cell, traverse M ABS subframe proportion parameters, to acquire a maximum value of a second utility function of downlink scheduling priorities of Y UEs; and acquire, according to the maximum value of values of the second utility function, a second ABS subframe proportion parameter that corresponds to the maximum value of the values of the second utility function includes:

the processor being configured to:

after the first ABS subframe proportion parameter is configured for the macro cell, and the at least one CRE parameter is configured for the macro cell and the at least one micro cell, traverse the M ABS subframe proportion parameters, to acquire the maximum value of the second utility function of the downlink scheduling priorities of the Y UEs, where the second utility function in-

cludes: $$\sum_{l \in Y} \mathrm{Pr}_l,$$ where 1 indicates a sequence number of UE, 1 is an integer greater than or equal to 1 and less than or equal to Y, and $\mathrm{Pr}_l$ indicates a downlink scheduling priority of the 1th UE, and acquire, according to the maximum value of the values of the second utility function, the second ABS subframe proportion parameter that corresponds to the maximum value of the values of the second utility function.

With reference to the third aspect of the present invention or any one of the first to sixth manners of the third aspect, in a seventh manner of the third aspect,
the processor being configured to: when load of a macro cell is greater than or equal to a load threshold, or when a timer reaches a system preset time, acquire a first almost blank subframe ABS subframe proportion parameter of the macro cell and at least one cell range expansion CRE parameter includes:

the processor being configured to: when the load of the macro cell is greater than or equal to the load threshold, or when the timer reaches the system preset time, acquire the first almost blank subframe ABS subframe proportion parameter and the at least one cell range expansion CRE parameter, where
the load of the macro cell includes: average RB utilization of the macro cell or a quantity of users of the macro cell; and
the load of the macro cell being greater than or equal to the load threshold includes: the average RB utilization of the macro cell being greater than or equal to an average RB utilization threshold, or the quantity of users of the macro cell being greater than or equal to a user quantity threshold.

With reference to the third aspect of the present invention or any one of the first to seventh manners of the third aspect, in an eighth manner of the third aspect, the network device includes: a macro base station to which the macro cell belongs, or a centralized controller, where the centralized controller is configured to control the macro base station and a micro base station to which the micro cell belongs.

According to the method of the present invention, when load of a macro cell is greater than or equal to a load threshold, a coverage area of a micro cell is expanded by configuring a first ABS subframe proportion parameter for the macro cell, and configuring at least one CRE parameter for the macro cell and at least one micro cell, so that the at least one micro cell adsorbs some user equipments UE that belong to the macro cell, and the load of the macro cell is reduced, thereby balancing load of the macro cell and the at least one micro cell, and improving a throughput of a network edge user.

## BRIEF DESCRIPTION OF DRAWINGS

To describe the technical solutions in the embodiments of the present invention more clearly, the following briefly introduces the accompanying drawings required for describing the embodiments. Apparently, the accompanying drawings in the following description show merely some embodiments of the present invention, and a person of ordinary skill in the art may still derive other drawings from these accompanying drawings without creative efforts.

FIG. 1 is a schematic diagram of a wireless communications network according to an embodiment of the present invention;

FIG. 2 is a schematic flowchart of a time-domain interference coordination method according to an embodiment of the present invention;

FIG. 3 is a schematic flowchart of another time-domain interference coordination method according to an embodiment of the present invention;

FIG. 4 is a schematic flowchart of a step of ensuring communication quality of UE located within range expansion;

FIG. 5 is a schematic flowchart of a step of adaptively adjusting an ABS subframe proportion parameter of a macro cell;

FIG. 6 is a schematic structural diagram of a network device according to an embodiment of the present invention;

FIG. 7 is a schematic structural diagram of another network device according to an embodiment of the present invention; and

FIG. 8 is a schematic structural diagram of still another network device according to an embodiment of the present invention.

## DESCRIPTION OF EMBODIMENTS

The following clearly and completely describes the technical solutions in the embodiments of the present invention with reference to the accompanying drawings in the embodiments of the present invention. Apparently, the described embodiments are merely some but not all of the embodiments of the present invention. All other embodiments obtained by a person of ordinary skill in the art based on the embodiments of the present invention without creative efforts shall fall within the protection scope of the present invention.

FIG. 1 shows a wireless communications network 100 according to an embodiment of the present invention. The network may be a Long Term Evolution (Long Term Evolution, LTE) network, or may be a Long Term Evolution Advanced LTE-Advanced network. The wireless communications network includes several base stations (for example, macro base stations 101a, 101b, and 101c, and micro base stations 102a, 102b, 102c, and 102d) and other network entities (for example, a core network device, where the device is not shown in FIG. 1), configured to support wireless communications of several user equipments (for example, 103a, 103b, and 103c).

The base stations 101 and the base stations 102 are evolved base stations (evolved NodeB, eNodeB) in LTE. One base station can support/manage one or more cells, and each base station can serve multiple UEs. UE selects a cell to initiate network access, and performs a voice and/or data service with a base station 101 or a base station 102, where the base station 101 is a macro base station, and the base station 102 is a micro base station, where a micro base station may also be referred to as a small cell, and transmit power of a micro base station is relatively low relative to that of a macro base station. A co-coverage and intra-frequency heterogeneous network is formed by deploying a low-powered micro base station within a coverage area of a macro base station. In FIG. 1, an example in which a macro base station manages three macro cells (for example, 104a, 104b, and 104c), and a micro base station manages one micro cell (for example, 105a or 105b) is used for description.

User equipment (User Equipment, UE) 103 may also be referred to as a mobile terminal (Mobile Terminal, MT), a mobile station (Mobile Station, MS), or the like.

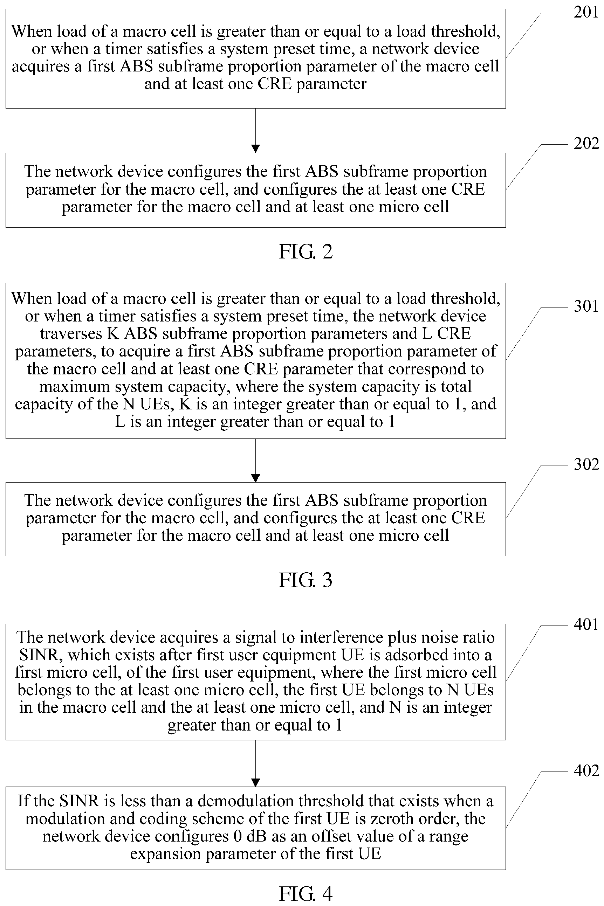

As shown in FIG. 2, an embodiment of the present invention provides a time-domain interference coordination method, applicable to the wireless communications network provided in FIG. 1, where the wireless communications network belongs to an intra-frequency heterogeneous network. The time-domain interference coordination method includes:

201. When load of a macro cell is greater than or equal to a load threshold, or when a timer reaches a system preset time, a network device acquires a first ABS subframe proportion parameter of the macro cell and at least one CRE parameter.

For at least one micro cell within a coverage area of the macro cell, the macro cell and the at least one micro cell are cells that are neighboring to each other. The at least one CRE parameter is a CRE parameter for the macro cell and the at least one micro cell. When there is only one micro cell within the coverage area of the macro cell, only a CRE parameter for the macro cell and the micro cell, that is, one CRE parameter, needs to be acquired; and when there are multiple micro cells within the coverage area of the macro cell, a CRE parameter for the macro cell and each micro cell of the multiple micro cells, that is, multiple CRE parameters, needs to be acquired.

The network device may be a macro base station to which the macro cell belongs, and the macro base station acquires the first ABS subframe proportion parameter and the at least one CRE parameter; or the network device may be a centralized controller configured to control the macro base station and a micro base station to which the micro cell belongs, and the centralized controller acquires the first ABS subframe proportion parameter and the at least one CRE parameter.

The network device may monitor a load status of the macro cell in real time, and when the load of the macro cell reaches a condition, the network device performs corresponding processing. The load of the macro cell may be average resource block (Resource Block, RB) utilization of the macro cell or a quantity of users in the macro cell. When the average RB utilization of the macro cell is greater than or equal to an average RB utilization threshold, or the quantity of users of the macro cell is greater than or equal to a user quantity threshold, it indicates that the load of the macro cell is excessively heavy, and configuration optimization needs to be performed on the macro cell and the at least one micro cell within the coverage area of the macro cell, so that the micro cell adsorbs more users, and the load of the macro cell is reduced.

A timer may also be used, and when the timer reaches a system preset time, the network device is triggered at a fixed time or is triggered periodically to perform corresponding processing.

The network device may acquire the first ABS subframe proportion parameter of the macro cell and the at least one CRE parameter according to a principle of maximum system capacity, so that in a configuration of the foregoing parameters, a system throughput or system capacity of N user equipments in the macro cell and the at least one micro cell reach the maximum.

202. The network device configures the first ABS subframe proportion parameter for the macro cell, and configures the at least one CRE parameter for the macro cell and at least one micro cell.

There is one CRE parameter for the macro cell and each micro cell within the coverage area of the macro cell, and there are multiple CRE parameters for the macro cell and multiple micro cells within the coverage area of the macro cell. For example, a first micro cell, a second micro cell, and a third micro cell are within a coverage area of a macro cell, and in this case, there is a first CRE parameter for the macro cell and the first micro cell, there is a second CRE parameter for the macro cell and the second micro cell, and there is a third CRE parameter for the macro cell and the third micro cell; therefore, the three CRE parameters are for the macro cell and the three micro cells within the coverage area of the macro cell. Therefore, in this embodiment, the at least one micro cell is within the coverage area of the macro cell, and one CRE parameter is for the macro cell and each micro cell of the at least one micro cell.

When the load of the macro cell is greater than or equal to the load threshold, or when the timer reaches the system preset time, the network device acquires the first ABS subframe proportion parameter and the at least one CRE parameter for the macro cell and the at least one micro cell in the macro cell; and configures the first ABS subframe proportion parameter for the macro cell, and configures the at least one CRE parameter for the macro cell and the at least one micro cell, so that the at least one micro cell adsorbs some UEs in the macro cell, thereby reducing the load of the macro cell, and balancing load of the macro cell and the at least one micro cell. On the basis of load balancing, interference is further reduced and a system throughput rate is further improved by setting an ABS subframe proportion parameter of a macro cell.

As shown in FIG. 3, an embodiment of the present invention further provides a time-domain interference coordination method, applicable to the wireless communications network provided in FIG. 1, where the wireless communications network belongs to an intra-frequency heterogeneous network. The time-domain interference coordination method includes:

> 301. When load of a macro cell is greater than or equal to a load threshold, or when a timer reaches a system preset time, the network device traverses K ABS subframe proportion parameters and L CRE parameters, to acquire a first ABS subframe proportion parameter of the macro cell and at least one CRE parameter that correspond to maximum system capacity, where the system capacity is total capacity of the N UEs, K is an integer greater than or equal to 1, and L is an integer greater than or equal to 1.

Step 301 may include: traversing the K ABS subframe proportion parameters and the L CRE parameters, to acquire a maximum value of values of a first utility function of downlink scheduling rates of the N UEs, and acquiring the first ABS subframe proportion parameter and the at least one CRE parameter according to the maximum value of the values of the first utility function.

The first utility function includes:

$$\sum_{i \in N} \log(r_i)$$ , where i indicates a sequence number of UE, i is an integer greater than or equal to 1 and less than or equal to N, and $r_i$ indicates a downlink scheduling rate of the $i^{th}$ UE. Certainly, a calculation manner is not limited to the first utility function .

302. The network device configures the first ABS subframe proportion parameter for the macro cell, and configures the at least one CRE parameter for the macro cell and at least one micro cell.

In this embodiment, the traversing the K ABS subframe proportion parameters and the L CRE parameters may be implemented in a manner of traversing multiple parameter combinations. Each parameter combination may include an ABS subframe proportion parameter and a CRE parameter, where a quantity of the ABS subframe proportion parameters is the same as a quantity of the macro cells, and a quantity of the CRE parameters is the same as a quantity of the micro cells. The network device traverses the multiple combinations; calculates, for each combination, a utility function of performance indicators of multiple user equipments that are in the macro cell and a micro cell within the coverage area of the macro cell; and acquires, according to a maximum value of the utility function of the performance indicators of the user equipments, an ABS subframe proportion parameter and a CRE parameter that correspond to the maximum value of the utility function of the performance indicators. A performance indicator of user equipment includes one or more of a downlink scheduling rate, a downlink signal to interference plus noise ratio, downlink received signal power strength, an uplink scheduling rate, an uplink signal to interference plus noise ratio, and uplink received signal power strength.

The present invention is further described with reference to the specific application scenario shown in FIG. 1.

For example, the intra-frequency heterogeneous network shown in FIG. 1 includes one macro cell 104a of the macro base station 101a and one micro cell 105a of the micro base station 102a, where the micro cell 105a is a micro cell within a coverage area of the macro cell 104a. When load of the macro cell 104a is greater than or equal to a load threshold, or when a timer reaches a system preset time, the network device acquires a first almost blank subframe ABS subframe proportion parameter of the macro cell 104a and a CRE parameter for the macro cell 104a and the micro cell 105a. The network device includes: the macro base station 101a to which the macro cell 104a belongs, or a centralized controller, where the centralized controller is configured to control the macro base station 101a, and the micro base station 102a to which the micro cell 105a belongs. Preferably, a manner of acquiring, by the network device, the first ABS subframe proportion parameter of the macro cell 104a and the CRE parameter for the macro cell 104a and the micro cell 105a that correspond to maximum system capacity includes: traversing, by the network device, K ABS subframe proportion parameters and L CRE parameters, to acquire the first ABS subframe proportion parameter of the macro cell 104a and the CRE parameter for the macro cell 104a and the micro cell 105a that correspond to maximum system capacity, where the system capacity is total capacity of N UEs, N is a quantity of UEs in the macro cell 104a and the micro cell 105a, K is an integer greater than or equal to 1, and L is an integer greater than or equal to 1. For a specific process of this acquiring manner, reference may be further made to the description in step 301, and details are not described in detail herein again.

After the first ABS subframe proportion parameter and the CRE parameter for the macro cell 104a and the micro cell 105a are acquired, the network device configures the first ABS subframe proportion parameter for the macro cell 104a, and configures the CRE parameter for the macro cell 104a and the micro cell 105a for the macro cell 104a and the micro cell 105a.

For another example, the intra-frequency heterogeneous network shown in FIG. 1 includes one macro cell 104a of the macro base station 101a, and multiple micro cells, where the multiple micro cells are micro cells within a coverage area of the macro cell 104a, that is, the micro cell 105a of the micro base station 102a and the micro cell 105b of the micro base station 102b. When load of the macro cell 104a is greater than or equal to a load threshold, or when a timer reaches a system preset time, the network device acquires a first ABS subframe proportion parameter of the macro cell 104a and multiple cell range expansion CRE parameters, where the multiple CRE parameters are CRE parameters for the macro cell 104a and the micro cell 105a, and for the macro cell 104a and the micro cell 105b. The network device includes: the macro base station 101a to which the macro cell 104a belongs, or a centralized controller, where the centralized controller is configured to control the macro base station 101a, and the micro base station 102a and the micro base station 102b. Preferably, for a specific acquiring process of acquiring, by the network device, the first ABS subframe proportion parameter of the macro cell 104a and the multiple CRE parameters that correspond to the maximum system capacity, reference may be made to step 301, and details are not described in detail herein again.

After the first ABS subframe proportion parameter and the multiple CRE parameters are acquired, the network device configures the first ABS subframe proportion parameter for the macro cell 104a, and configures a first CRE parameter for the macro cell 104a and the micro cell 105a and configures a second CRE parameter for the macro cell 104a and the micro cell 105b, so that the micro cell 105a and the micro cell 105b can adsorb some user equipments UE in the macro cell 104a.

In the foregoing embodiment, the traversing the K ABS subframe proportion parameters and the L CRE parameters may be implemented in a manner of traversing multiple parameter combinations. Each parameter combination may include one ABS subframe proportion parameter and multiple CRE parameters, where a quantity of the multiple CRE parameters is the same as a quantity of the multiple micro cells. The network device traverses various combinations of ABS subframe proportion parameters and CRE parameters; calculates, for each combination, a utility function of performance indicators of multiple user equipments that are in the macro cell and at least one micro cell within the coverage area of the macro cell; and acquires, according to a maximum value of the utility function of the performance indicators of the user equipments, an ABS subframe proportion parameter and CRE parameters that correspond to the maximum value of the utility function of the performance indicators.

For another example, the intra-frequency heterogeneous network shown in FIG. 1 includes multiple macro cells and multiple micro cells, where the multiple macro cells include the macro cells 104a, 104b, and 104c of the macro base station 101a, and the multiple micro cells include the micro cell 105a of the micro base station 102a, the micro cell 105b of the micro base station 102b, a micro cell 105c of the third micro base station 102c, and a micro cell 105d of the fourth micro base station 102d. The micro cell 105a and the micro cell 105b are micro cells within a coverage area of the macro cell 104a, the micro cell 105c is a micro cell within a coverage area of the macro cell 104b, and the micro cell 105d is a micro cell within a coverage area of the macro cell 104c.

When average load of the macro cells 104a, 104b, and 104c is greater than or equal to a load threshold, or when a timer reaches a system preset time, the network device separately acquires first ABS subframe proportion parameters of the macro cells 104a, 104b, and 104c and multiple CRE parameters, where the multiple CRE parameters include a first CRE parameter for the macro cell 104a and the micro cell 105a, a second CRE parameter for the macro cell 104a and the micro cell 105b, a third CRE parameter for the macro cell 104b and the micro cell 105c, and a fourth CRE parameter for the macro cell 104c and the micro cell 105d. The network device includes: the macro base station 101a to which the multiple macro cells belong, or a centralized controller, where the centralized controller is configured to control the macro base station 101a, and the micro base stations 102a, 102b, 102c, and 102d. Preferably, for a specific acquiring process of acquiring, by the network device, the first ABS subframe proportion parameters of the macro cells and the multiple CRE parameters that correspond to maximum system capacity, reference may be made to step 301, and details are not described in detail herein again.

After the first ABS subframe proportion parameters and the multiple CRE parameters are acquired, the network device separately configures the first ABS subframe proportion parameters for the macro cells 104a, 104b, and 104c, configures a first CRE parameter for the macro cell 104a and the micro cell 105a, configures a second CRE parameter for the macro cell 104a and the micro cell 105b, configures a third CRE parameter for the macro cell 104b and the micro cell 105c, and configures a fourth CRE parameter for the macro cell 104c and the micro cell 105d.

In the foregoing embodiment, the traversing the K ABS subframe proportion parameters and the L CRE parameters may be implemented in a manner of traversing multiple parameter combinations. Each parameter combination may include multiple ABS subframe proportion parameters and multiple CRE parameters, where a quantity of the multiple ABS subframe proportion parameters is the same as a quantity of the multiple macro cells, and a quantity of the multiple CRE parameters is the same as a quantity of the multiple micro cells. The network device traverses the multiple combinations; calculates, for each combination, a utility function of performance indicators of multiple user equipments in the macro cells and multiple micro cells within the coverage areas of the macro cells; and acquires, according to a maximum value of the utility function of the performance indicators of the user equipments, ABS subframe proportion parameters and CRE parameters that correspond to the maximum value of the utility function of the performance indicators.

It should be noted herein that the multiple macro cells in this embodiment not only may include the macro cells 104a, 104b, and 104c of the macro base station 101a, but also may include a macro cell of the macro base station 101b and a macro cell of the macro base station 101c; and the multiple micro cells not only may include the micro cell 105a of the micro base station 102a, the micro cell 105b of the micro base station 102b, the micro cell 105c of the micro base station 102c, and the micro cell 105d of the micro base station 102d, but also may include micro cells of micro base stations 102e, 102f, 102g, and 102h and a micro cell of a micro base stations 102i.

To facilitate network optimization, cells of the intra-frequency heterogeneous network may be classified as a cluster. A cluster is obtained by means of classification in multiple manners. For example, all the macro cells and all the micro cells on the wireless communications network 100 in FIG. 1 may be classified as a cluster, or multiple macro cells of one macro base station and micro cells within coverage areas of the macro cells on the wireless communications network 100 may be classified as a cluster, or one macro cell and a micro cell within a coverage area of the macro cell may be classified as a cluster. In the time-domain interference coordination method provided in the present invention, a cluster may be used as a unit, and when load of a macro cell in a cluster is greater than or equal to a load threshold, or when a timer reaches a system preset time, a control device is used to configure an ABS subframe proportion parameter for the macro cell in the cluster, and configure a CRE parameter for the macro cell and a micro cell in the cluster.

Content of the specific implementation manners described above not only includes an embodiment that is applicable to a case in which one macro cell and a micro cell within a coverage area of the macro cell are classified as a cluster, but also includes an embodiment that is applicable to a case in which multiple macro cells and micro cells within coverage areas of the macro cells are classified as a cluster. Details are not described in detail herein again.

However, it should be further noted that for an entire system, to reduce interference between macro base stations, ABS subframe locations of neighboring clusters may be non-overlapped or partially non-overlapped.

In the foregoing embodiment, when load of a macro cell is less than a load threshold, 0 dB may be configured as a CRE parameter for the macro cell and a micro cell, and the ABS subframe proportion parameter does not need to be configured.

In the foregoing embodiment, based on a change of service load of a macro cell and a micro cell, an ABS subframe proportion parameter and a CRE parameter may be automatically optimized to adapt to a constantly changing network status, thereby further balancing load statuses of a macro cell and a micro cell, reducing interference of a macro base station on a micro base station, and improving a system throughput rate.

To ensure communication quality of UE within range expansion, the following measure may be further used in the foregoing embodiments. Before the network device configures the first ABS subframe proportion parameter for the macro cell, and configures the at least one CRE parameter for the macro cell and the at least one micro cell, as shown in FIG. 4, the time-domain interference coordination method may further include:

401. The network device acquires a signal to interference plus noise ratio (Signal to Interference plus Noise Ratio, SINR) obtained after first user equipment UE is adsorbed into a first micro cell, where the first micro cell belongs to the at least one micro cell, the first UE belongs to the N UEs in the macro cell and the at least one micro cell, and N is an integer greater than or equal to 1.

When the network device is a macro base station, the macro base station may estimate, according to the acquired first ABS subframe proportion parameter and at least one CRE parameter, the SINR obtained after the first UE is adsorbed into the first micro cell.

When the network device is a centralized controller, a macro base station may estimate, according to the first ABS subframe proportion parameter and the at least one CRE parameter, the SINR obtained after the first UE is adsorbed into the first micro cell, and the centralized controller acquires the SINR of the first UE from the macro base station.

402. If the SINR is less than a demodulation threshold that exists when a modulation and coding scheme (Modulation and Coding Scheme, MCS) of the first UE is zeroth order, the network device configures 0 dB as an offset value of a range expansion (Range Expansion, RE) parameter of the first UE. Because the SINR is less than the demodulation threshold, if the first UE is adsorbed into the micro cell, communication quality of the UE cannot be ensured. 0 dB is configured as the offset value of the RE parameter of the first UE, that is, it is prohibited that the first UE is adsorbed into the micro cell, to further ensure communication quality of the first UE.

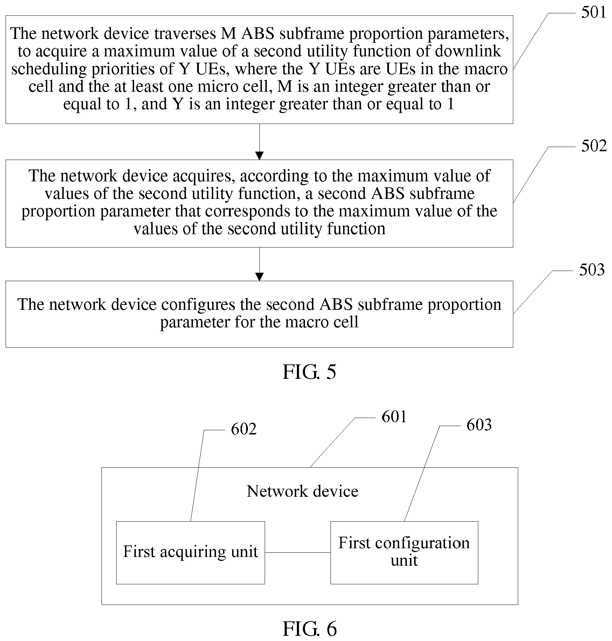

In an actual application, services and/or locations of UEs in a macro cell and a micro cell constantly change, and to maintain balancing of load of the macro cell and the micro cell, the following technical measure may be further used in the embodiments of the present invention. After configuring the first ABS subframe proportion parameter for the macro cell, and configuring the at least one CRE parameter for the macro cell and the at least one micro cell, the network device adaptively adjusts the ABS subframe proportion parameter of the macro cell. As shown in FIG. 5, specific steps include:

501. The network device traverses M ABS subframe proportion parameters, to acquire a maximum value of a second utility function of downlink scheduling priorities of Y UEs, where the Y UEs are UEs in the macro cell and the at least one micro cell, M is an integer greater than or equal to 1, Y is an integer greater than or equal to 1, and the second utility function includes:

$$\sum_{l \in Y} \mathrm{Pr}_l$$ where l indicates a sequence number of UE, $l$ is an integer greater than or equal to 1 and less than or equal to Y, and $\mathrm{Pr}_l$ indicates a downlink scheduling priority of the $l^{\mathrm{th}}$ UE.

502. The network device acquires, according to the maximum value of values of the second utility function, a second ABS subframe proportion parameter that corresponds to the maximum value of the values of the second utility function.

503. The network device configures the second ABS subframe proportion parameter for the macro cell.

The ABS subframe proportion parameter of the macro cell is adaptively adjusted, which can adapt to a rapidly changing location and service of UE in a system, and further improving a system throughput rate.

As shown in FIG. 6, an embodiment of the present invention provides a network device 601, including:

a first acquiring unit 602, configured to: when load of a macro cell is greater than or equal to a load threshold, or when a timer reaches a system preset time, acquire a first almost blank subframe ABS subframe proportion parameter of the macro cell and at least one cell range expansion CRE parameter, where the at least one cell range expansion CRE parameter is a CRE parameter for the macro cell and at least one micro cell, and the at least one micro cell is a micro cell within a coverage area of the macro cell; and

a first configuration unit 603, configured to: after the first acquiring unit 602 acquires the first ABS subframe proportion parameter, configure the first ABS subframe proportion parameter for the macro cell, and configure, for the macro cell and the at least one micro cell, the at least one CRE parameter acquired by the first acquiring unit 602.

The network device 601 is configured to expand a coverage area of a micro cell in an intra-frequency heterogeneous network by configuring a first ABS subframe proportion parameter for a macro cell, and configuring at least one CRE parameter for the macro cell and at least one micro cell, so that the at least one micro cell adsorbs some UEs that belong to the macro cell, and load of the macro cell is reduced.

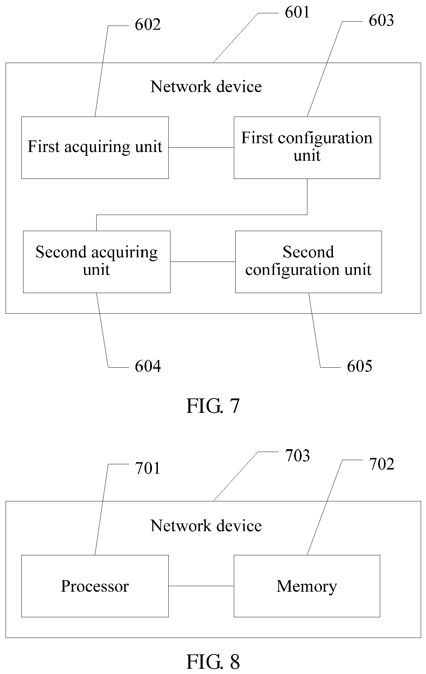

As shown in FIG. 7, to ensure communication quality of UE within range expansion, the network device 601 provided in the foregoing embodiment may further include:

a second acquiring unit 604, configured to: before the first configuration unit 603 configures the first ABS subframe proportion parameter for the macro cell, and configures the at least one CRE parameter for the macro cell and the at least one micro cell, acquire a signal to interference plus noise ratio SINR obtained after first user equipment UE is adsorbed into a first micro cell, where the first micro cell belongs to the at least one micro cell, the first UE belongs to N UEs in the macro cell and the at least one micro cell, and N is an integer greater than or equal to 1; and

a second configuration unit 605, configured to: if the SINR acquired by the second acquiring unit 604 is less than a demodulation threshold that exists when a modulation and coding scheme MCS of the first UE is zeroth order, configure an offset value of a range expansion RE parameter of the first UE as 0 dB.

Preferably, the first acquiring unit 602 is further configured to traverse K ABS subframe proportion parameters and L CRE parameters, to acquire the first ABS subframe proportion parameter and the at least one CRE parameter that correspond to maximum system capacity, where the system capacity is total capacity of the N UEs, K is an integer greater than or equal to 1, and L is an integer greater than or equal to 1.

Preferably, the first acquiring unit 602 is further configured to traverse the K ABS subframe proportion parameters and the L CRE parameters, to acquire a maximum value of values of a first utility function of downlink scheduling rates of the N UEs, and acquire the first ABS subframe proportion parameter and the at least one CRE parameter according to the maximum value of the values of the first utility function.

Preferably, the first utility function includes:

$$\sum_{i\in N}\log(r_i)$$ where i indicates a sequence number of UE, i is an integer greater than or equal to 1 and less than or equal to N, and $r_i$ indicates a downlink scheduling rate of the $i^{th}$ UE.

In an actual application, services and/or locations of UEs in a macro cell and a micro cell constantly change, and to maintain balancing of load of the macro cell and the micro cell, the first acquiring unit 602 in the network device 601 provided in the foregoing embodiment is further configured to: after the first configuration unit 603 configures the first ABS subframe proportion parameter for the macro cell, and configures the at least one CRE parameter for the macro cell and the at least one micro cell, traverse M ABS subframe proportion parameters, to acquire a maximum value of a second utility function of downlink scheduling priorities of Y UEs, where the Y UEs are UEs in the macro cell and the at least one micro cell, M is an integer greater than or equal to 1, and Y is an integer greater than or equal to 1, and acquire, according to the maximum value of values of the second utility function, a second ABS subframe proportion parameter that corresponds to the maximum value of the values of the second utility function, where the first configuration unit 603 is further configured to: after the first acquiring unit 602 acquires the second ABS subframe proportion parameter, configure the second ABS subframe proportion parameter for the macro cell.

Preferably, the second utility function includes:

$$\sum_{l\in Y}\Pr_l$$ where $l$ indicates a sequence number of UE, $l$ is an integer greater than or equal to 1 and less than or equal to Y, and $\Pr_l$ indicates a downlink scheduling priority of the $1^{th}$ UE.

Preferably, the load of the macro cell includes: average RB utilization of the macro cell or a quantity of users of the macro cell; and the load of the macro cell being greater than or equal to the load threshold includes: the average RB utilization of the macro cell being greater than or equal to an average RB utilization threshold, or the quantity of users of the macro cell being greater than or equal to a user quantity threshold.

The network device 601 provided in this embodiment of the present invention may include: a macro base station to which the macro cell belongs, or a centralized controller, where the centralized controller is configured to control the macro base station and a micro base station to which the micro cell belongs.

As shown in FIG. 8, an embodiment of the present invention further provides another network device 703, including: a processor 701, and a memory 702 connected to the processor 701.

The processor 701 is configured to: when load of a macro cell is greater than or equal to a load threshold, or when a timer reaches a system preset time, acquire a first almost blank subframe ABS subframe proportion parameter of the macro cell and at least one cell range expansion CRE parameter from the memory 702, where the at least one cell range expansion CRE parameter is a CRE parameter for the macro cell and at least one micro cell, and the at least one micro cell is a micro cell within a coverage area of the macro cell; and the processor 701 is further configured to: after the first ABS subframe proportion parameter is acquired, configure the first ABS subframe proportion parameter for the macro cell, and configure, for the macro cell and the at least one micro cell, the at least one CRE parameter acquired by the first acquiring unit.

To ensure communication quality of UE within range expansion, the processor 701 in the network device provided in the foregoing embodiment is further configured to: before the first ABS subframe proportion parameter is configured for the macro cell, and the at least one CRE parameter is configured for the macro cell and the at least one micro cell, acquire a signal to interference plus noise ratio SINR obtained after first user equipment UE is adsorbed into a first micro cell, where the first micro cell belongs to the at least one micro cell, the first UE belongs to N UEs in the macro cell and the at least one micro cell, and N is an integer greater than or equal to 1; and if the acquired SINR is less than a demodulation threshold that exists when a modulation and coding scheme MCS of the first UE is zeroth order, configure an offset value of a range expansion RE parameter of the first UE as 0 dB.

Preferably, the processor 701 being configured to acquire a first almost blank subframe ABS subframe proportion parameter of the macro cell and at least one cell range expansion CRE parameter from the memory 702 includes:

the processor 701 being configured to traverse K ABS subframe proportion parameters and L CRE parameters that are stored in the memory 702, to acquire the first ABS subframe proportion parameter and the at least one CRE parameter that correspond to maximum system capacity, where the system capacity is total capacity of the N UEs, K is an integer greater than or equal to 1, and L is an integer greater than or equal to 1.

Preferably, the processor 701 being configured to traverse K ABS subframe proportion parameters and L CRE parameters that are stored in the memory 702, to acquire the first ABS subframe proportion parameter and the at least one CRE parameter that correspond to maximum system capacity includes:

the processor 701 being configured to traverse the K ABS subframe proportion parameters and the L CRE parameters that are stored in the memory 702, to acquire a maximum value of values of a first utility function of downlink scheduling rates of the N UEs; and
acquiring the first ABS subframe proportion parameter and the at least one CRE parameter according to the maximum value of the values of the first utility function.

Preferably, the first utility function includes:

$$\sum_{i \in N} \log(r_i)$$ where i indicates a sequence number of UE, i is an integer greater than or equal to 1 and less than or equal to N, and $r_i$ indicates a downlink scheduling rate of the $i^{th}$ UE.

Preferably, the processor 701 is further configured to: after the first ABS subframe proportion parameter is configured for the macro cell, and the at least one CRE parameter is configured for the macro cell and the at least one micro cell, traverse M ABS subframe proportion parameters stored in the memory 702, to acquire a maximum value of a second utility function of downlink scheduling priorities of Y UEs, where the Y UEs are UEs in the macro cell and the at least one micro cell, M is an integer greater than or equal to 1, and Y is an integer greater than or equal to 1; and acquire, according to the maximum value of values of the second utility function, a second ABS subframe proportion parameter that corresponds to the maximum value of the values of the second utility function; and the processor 701 is further configured to: after the first acquiring unit acquires the second ABS subframe proportion parameter, configure the second ABS subframe proportion parameter for the macro cell.

Preferably, the second utility function includes:

$$\sum_{l \in Y} Pr_l$$ where l indicates a sequence number of UE, l is an integer greater than or equal to 1 and less than or equal to Y, and $Pr_l$ indicates a downlink scheduling priority of the $l^{th}$ UE.

Preferably, the load of the macro cell includes: average RB utilization of the macro cell or a quantity of users of the macro cell; and the load of the macro cell being greater than or equal to the load threshold includes: the average RB utilization of the macro cell being greater than or equal to an average RB utilization threshold, or the quantity of users of the macro cell being greater than or equal to a user quantity threshold.

Preferably, the network device includes: a macro base station to which the macro cell belongs, or a centralized controller, where the centralized controller is configured to control the macro base station and a micro base station to which the micro cell belongs.

A person of ordinary skill in the art may understand that all or some of the steps of the methods in the embodiments may be implemented by a program instructing related hardware. The program may be stored in a computer-readable storage medium. The storage medium may include: a read-only memory (ROM, Read-Only Memory), a random access memory (RAM, Random Access Memory), a magnetic disk, or an optical disc.

The time-domain interference coordination method and the network device provided in the embodiments of the present invention are described in detail above. Specific examples are used in this specification to describe the principle and implementation manners of the present invention. The descriptions of the foregoing embodiments are merely intended to help understand the method and core idea of the present invention. In addition, a person skilled in the art may, according to the idea of the present invention, make modifications with respect to the specific implementation manners and the application scope. Therefore, the content of this specification shall not be construed as a limitation on the present invention.

**Claims**

1. A network device, the network device comprising:

a first acquiring unit (602), configured to: when load of a macro cell is greater than or equal to a load threshold, or when a timer reaches a system preset time, acquire a first almost blank subframe, ABS, subframe proportion parameter of the macro cell and at least one cell range expansion, CRE, parameter, wherein the at least one CRE parameter is a CRE parameter for the macro cell and at least one micro cell, and the at least one micro cell is a micro cell within a coverage area of the macro cell; and
a first configuration unit (603), configured to configure the first ABS subframe proportion parameter for the macro cell and configure the at least one CRE parameter for the macro cell and the at least one micro cell according to the first ABS subframe proportion parameter and the at least one CRE parameter that are acquired by the first acquiring unit (602);
**characterized in that** the first acquiring unit (602) is configured to:

traverse K ABS subframe proportion parameters and L CRE parameters, to acquire the first ABS subframe proportion parameter and the at least one CRE parameter that correspond to maximum system capacity, wherein the system capacity is the total capacity of N user equipments, UEs, K is an integer greater than or equal to 1, L is an integer greater than or equal to 1, and N is an integer greater than or equal to 1.

2. The network device according to claim 1, further comprising:

a second acquiring unit (604), configured to: before the first configuration unit (603) configures the first ABS subframe proportion parameter for the macro cell and configures the at least one CRE parameter for the macro cell and the at least one micro cell, acquire a signal to interference plus noise ratio, SINR, obtained after a first user equipment, UE, is adsorbed into a first micro cell, wherein the first micro cell belongs to the at least one micro cell, the first UE belongs to the N UEs in the macro cell and the at least one micro cell; and
a second configuration unit (605), configured to: if the SINR acquired by the second acquiring unit (604) is less than a demodulation threshold that exists when a modulation and coding scheme, MCS, of the first UE is zeroth order, configure an offset value of a range expansion, RE, parameter of the first UE as 0 dB.

3. The network device according to claim 1, wherein the first acquiring unit (602) is configured to:

traverse the K ABS subframe proportion parameters and the L CRE parameters, to acquire a maximum value of values of a first utility function of downlink scheduling rates of the N UEs, and acquire the first ABS subframe proportion parameter and the at least one CRE parameter according to the maximum value of the values of the first utility function.

4. The network device according to claim 3, wherein the first acquiring unit (602) is configured to:

traverse the K ABS subframe proportion parameters and the L CRE parameters, to acquire the maximum value of the values of the first utility function of the downlink scheduling rates of the N UEs, wherein the first utility function comprises: $\sum_{i \in N} \log(r_i)$, wherein i indicates a sequence number of UE, i is an integer greater than or equal to 1 and less than or equal to N, and $r_i$ indicates a downlink scheduling rate of the $i^{th}$ UE, and acquire the first ABS subframe proportion parameter and the at least one CRE parameter according to the maximum value of the values of the first utility function.

5. The network device according to any one of claims 1 to 4, wherein the first acquiring unit (602) is configured to: when the load of the macro cell is greater than or equal to the load threshold, or when the timer reaches the system preset time, acquire the first ABS subframe proportion parameter and the at least one CRE parameter, wherein
the load of the macro cell comprises: average resource block, RB, utilization of the macro cell or a quantity of users of the macro cell; and
the load of the macro cell being greater than or equal to the load threshold comprises: the average RB utilization of the macro cell being greater than or equal to an average RB utilization threshold, or the quantity of users of the macro cell being greater than or equal to a user quantity threshold.

6. The network device according to any one of claims 1 to 5, wherein the network device comprises: a macro base station to which the macro cell belongs; or a centralized controller, wherein the centralized controller is configured to control the macro base station and a micro base station to which the micro cell belongs.

7. A time-domain interference coordination method, the method comprising:

when load of a macro cell is greater than or equal to a load threshold, or when a timer reaches a system preset time, acquiring (201), by a network device, a first almost blank subframe, ABS, subframe proportion parameter of the macro cell and at least one cell range expansion, CRE, parameter, wherein the at least one CRE parameter is a CRE parameter for the macro cell and at least one micro cell, and the at least one micro cell is a micro cell within a coverage area of the macro cell; and
configuring (202), by the network device, the first ABS subframe proportion parameter for the macro cell, and configuring the at least one CRE parameter for the macro cell and the at least one micro cell;
**characterized in that** the acquiring, by the network device, of the first ABS subframe proportion parameter of the macro cell and the at least one CRE parameter comprises:

traversing, by the network device, K ABS subframe proportion parameters and L CRE parameters, to acquire the first ABS subframe proportion parameter and the at least one CRE parameter that correspond to maximum system capacity, wherein the system capacity is the total capacity of N user equipments, UEs, K is an integer greater than or equal to 1, L is an integer greater than or equal to 1, and N is an integer greater than or equal to 1.

8. The time-domain interference coordination method according to claim 7, wherein before the configuring, by the network device, the first ABS subframe proportion parameter for the macro cell, and configuring the at least one CRE parameter for the macro cell and the at least one micro cell, the method further comprises:

acquiring, by the network device, a signal to interference plus noise ratio, SINR, obtained after a first user equipment, UE, is adsorbed into a first micro cell, wherein the first micro cell belongs to the at least one micro cell, the first UE belongs to the N UEs in the macro cell and the at least one micro cell; and
if the SINR is less than a demodulation threshold that exists when a modulation and coding scheme, MCS, of the first UE is zeroth order, configuring, by the network device, an offset value of a range expansion, RE, parameter of the first UE as 0 dB.

9. The time-domain interference coordination method according to claim 7, wherein the traversing, by the network device, K ABS subframe proportion parameters and L CRE parameters, to acquire the first ABS subframe proportion parameter and the at least one CRE parameter that correspond to maximum system capacity comprises:

traversing the K ABS subframe proportion parameters and the L CRE parameters, to acquire a maximum value of values of a first utility function of downlink scheduling rates of the N UEs; and
acquiring the first ABS subframe proportion parameter and the at least one CRE parameter according to the maximum value of the values of the first utility function.

10. The time-domain interference coordination method according to claim 9, wherein the first utility function comprises:

$$\sum_{i \in N} \log(r_i)$$ wherein i indicates a sequence number of UE, i is an integer greater than or equal to 1 and less than or equal to N, and $r_i$ indicates a downlink scheduling rate of the $i^{th}$ UE.

11. The time-domain interference coordination method according to any one of claims 7 to 10, wherein the load of the macro cell comprises:

average resource block, RB, utilization of the macro cell or a quantity of users of the macro cell; and
the load of the macro cell being greater than or equal to the load threshold comprises: the average RB utilization of the macro cell being greater than or equal to an average RB utilization threshold, or the quantity of users of the macro cell being greater than or equal to a user quantity threshold.

12. The time-domain interference coordination method according to any one of claims 7 to 11, wherein the network device comprises:

a macro base station to which the macro cell belongs; or
a centralized controller, wherein the centralized controller is configured to control the macro base station and a micro base station to which the micro cell belongs.

**Patentansprüche**

1. Netzvorrichtung, wobei die Netzvorrichtung Folgendes umfasst:

eine erste Beschaffungseinheit (602), die für Folgendes ausgelegt ist: wenn die Last einer Makrozelle größer oder gleich einer Lastschwelle ist oder wenn ein Timer eine voreingestellte Systemzeit erreicht, Beschaffen eines ersten Fast-Leerer-Subrahmen- bzw. ABS-Subrahmenproportionsparameters der Makrozelle und mindestens eines Zellbereichserweiterungs- bzw. CRE-Parameters, wobei der mindestens eine CRE-Parameter ein CRE-Parameter für die Makrozelle und mindestens eine Mikrozelle ist und die mindestens eine Mikrozelle eine Mikrozelle in einem Versorgungsgebiet der Makrozelle ist; und
eine erste Konfigurationseinheit (603), ausgelegt zum Konfigurieren des ersten ABS-Subrahmenproportionsparameters für die Makrozelle und Konfigurieren des mindestens einen CRE-Parameters für die Makrozelle und die mindestens eine Mikrozelle gemäß dem ersten ABS-Subrahmenproportionsparameter und dem mindestens einen CRE-Parameter, die durch die erste Beschaffungseinheit (602) beschafft werden;
**dadurch gekennzeichnet, dass** die erste Beschaffungseinheit (602) ausgelegt ist zum Durchlaufen von K ABS-Subrahmenproportionsparametern und L CRE-Parametern, um den ersten ABS-Subrahmenproportionsparameter und den mindestens einen CRE-Parameter zu beschaffen, die maximaler Systemkapazität entsprechen, wobei die Systemkapazität die Gesamtkapazität von N Benutzergeräten, UE, ist, K eine ganze Zahl größer oder gleich 1 ist, L eine ganze Zahl größer oder gleich 1 ist und N eine ganze Zahl größer oder gleich 1 ist.

2. Netzvorrichtung nach Anspruch 1, ferner umfassend:

eine zweite Beschaffungseinheit (604), die für Folgendes ausgelegt ist:

bevor die erste Konfigurationseinheit (603) den ersten ABS-Subrahmenproportionsparameter für die Makrozelle konfiguriert und den mindestens einen CRE-Parameter für die Makrozelle und die mindestens eine Mikrozelle konfiguriert, Beschaffen eines Verhältnisses von Signal zu Störungen plus Rauschen, SINR, das erhalten wird, nachdem ein erstes Benutzergerät, UE, in eine erste Mikrozelle absorbiert wird, wobei die erste Mikrozelle zu der mindestens einen Mikrozelle gehört und das erste UE zu den N UE in der Makrozelle und der mindestens einen Mikrozelle gehört; und
eine zweite Konfigurationseinheit (605), die für Folgendes ausgelegt ist: falls das durch die zweite Beschaffungseinheit (604) beschaffte SINR kleiner als eine Demodulationsschwelle ist, die existiert, wenn ein Modulations- und Codierungsschema, MCS, des ersten UE von nullter Ordnung ist, Konfigurieren eines Offsetwerts eines Bereichserweiterungs- bzw. RE-Parameters des ersten UE als 0 dB.

3. Netzvorrichtung nach Anspruch 1, wobei die erste Beschaffungseinheit (602) für Folgendes ausgelegt ist:

Durchlaufen der K ABS-Subrahmenproportionsparameter und der L CRE-Parameter, um einen Maximalwert von Werten einer ersten Nutzenfunktion von Abwärtsstrecken-Schedulingraten der N UE zu beschaffen und den ersten ABS-Subrahmenproportionsparameter und den mindestens einen CRE-Parameter gemäß dem Maximalwert der Werte der ersten Nutzenfunktion zu beschaffen.

4. Netzvorrichtung nach Anspruch 3, wobei die erste Beschaffungseinheit (602) für Folgendes ausgelegt ist:

Durchlaufen der K ABS-Subrahmenproportionsparameter und der L CRE-Parameter, um den Maximalwert der Werte der ersten Nutzenfunktion der Abwärtsstrecken-Schedulingraten der N UE zu beschaffen, wobei die erste Nutzenfunktion $\sum_{i \in N} \log(r_i)$ umfasst, wobei i eine Sequenznummer von UE angibt, i eine ganze Zahl größer oder gleich 1 und kleiner oder gleich N ist und $r_i$ eine Abwärtsstrecken-Schedulingrate des i-ten UE angibt, und Beschaffen des ersten ABS-Subrahmenproportionsparameters und des mindestens einen CRE-Parameters gemäß dem Maximalwert der Werte der ersten Nutzenfunktion.

5. Netzvorrichtung nach einem der Ansprüche 1 bis 4, wobei die erste Beschaffungseinheit (602) für Folgendes ausgelegt ist: wenn die Last der Makrozelle größer oder gleich der Lastschwelle ist oder wenn der Timer die voreingestellte Systemzeit erreicht, Beschaffen des ersten ABS-Subrahmenproportionsparameters und des mindestens einen CRE-Parameters, wobei die Last der Makrozelle Folgendes umfasst: mittlere Ressourcenblock- bzw. RB-Auslastung der Makrozelle oder eine Quantität von Benutzern der Makrozelle; und dass die Last der Makrozelle, die größer oder gleich der Lastschwelle, ist, Folgendes umfasst: die mittlere RB-Auslastung der Makrozelle, die größer oder gleich einer Schwelle der mittleren RB-Auslastung ist, oder die Quantität von Benutzern der Makrozelle ist, die größer oder gleich einer Benutzerquantitätsschwelle, ist.

6. Netzvorrichtung nach einem der Ansprüche 1 bis 5, wobei die Netzvorrichtung Folgendes umfasst: eine Makrobasisstation, zu der die Makrozelle gehört; oder eine zentralisierte Steuerung, wobei die zentralisierte Steuerung ausgelegt ist zum Steuern der Makrobasisstation und einer Mikrobasisstation, zu der die Mikrozelle gehört.

7. Zeitbereichs-Störungskoordinationsverfahren, wobei das Verfahren Folgendes umfasst:

wenn die Last einer Makrozelle größer oder gleich einer Lastschwelle ist oder wenn ein Timer eine voreingestellte Systemzeit erreicht, Beschaffen (201) eines ersten Fast-Leerer-Subrahmen- bzw. ABS-Subrahmenproportionsparameters der Makrozelle und mindestens eines Zellbereichserweiterungs- bzw. CRE-Parameters durch eine Netzvorrichtung, wobei der mindestens eine CRE-Parameter ein CRE-Parameter für die Makrozelle und mindestens eine Mikrozelle ist und die mindestens eine Mikrozelle eine Mikrozelle in einem Versorgungsgebiet der Makrozelle ist; und Konfigurieren (202) des ersten ABS-Subrahmenproportionsparameters für die Makrozelle und Konfigurieren des mindestens einen CRE-Parameters für die Makrozelle und die mindestens eine Mikrozelle durch die Netzvorrichtung; **dadurch gekennzeichnet, dass** das Beschaffen des ersten ABS-Subrahmenproportionsparameters der Makrozelle und des mindestens einen CRE-Parameters durch die Netzvorrichtung Folgendes umfasst:

Durchlaufen von K ABS-Subrahmenproportionsparametern und L CRE-Parametern durch die Netzvorrichtung, um den ersten ABS-Subrahmenproportionsparameter und den mindestens einen CRE-Parameter zu beschaffen, die maximaler Systemkapazität entsprechen, wobei die Systemkapazität die Gesamtkapazität von N Benutzergeräten, UE, ist, K eine ganze Zahl größer oder gleich 1 ist, L eine ganze Zahl größer oder gleich 1 ist und N eine ganze Zahl größer oder gleich 1 ist.

8. Zeitbereichs-Störungskoordinationsverfahren nach Anspruch 7, wobei das Verfahren vor dem Konfigurieren des ersten ABS-Subrahmenproportionsparameters für die Makrozelle und dem Konfigurieren des mindestens einen CRE-Parameters für die Makrozelle und die mindestens eine Mikrozelle durch die Netzvorrichtung ferner Folgendes umfasst:

Beschaffen eines Verhältnisses von Signal zu Störungen plus Rauschen, SINR, durch die Netzvorrichtung, das erhalten wird, nachdem ein erstes Benutzergerät, UE, in eine erste Mikrozelle absorbiert wird, wobei die erste Mikrozelle zu der mindestens einen Mikrozelle gehört und das erste UE zu den N UE in der Makrozelle und der mindestens einen Mikrozelle gehört; und falls das SINR kleiner als eine Demodulationsschwelle ist, die existiert, wenn ein Modulations- und Codierungsschema, MCS, des ersten UE von nullter Ordnung ist, Konfigurieren eines Offsetwerts eines Bereichserweiterungs- bzw. RE-Parameters des ersten UE als 0 Db durch die Netzvorrichtung.

**9.** Zeitbereichs-Störungskoordinationsverfahren nach Anspruch 7, wobei das Durchlaufen von K ABS-Subrahmenproportionsparametern und L CRE-Parametern durch die Netzvorrichtung, um den ersten ABS-Subrahmenproportionsparameter und den mindestens einen CRE-Parameter zu beschaffen, die maximaler Systemkapazität entsprechen, Folgendes umfasst:

> Durchlaufen der K ABS-Subrahmenproportionsparameter und der L CRE-Parameter, um einen Maximalwert von Werten einer ersten Nutzenfunktion von Abwärtsstrecken-Schedulingraten der N UE zu beschaffen und
> Beschaffen des ersten ABS-Subrahmenproportionsparameters und des mindestens einen CRE-Parameters gemäß dem Maximalwert der Werte der ersten Nutzenfunktion.

**10.** Zeitbereichs-Störungskoordinationsverfahren nach Anspruch 9, wobei die erste Nutzenfunktion $\sum_{i\in N}\log(r_i)$ umfasst, wobei i eine Sequenznummer von UE angibt, i eine ganze Zahl größer oder gleich 1 und kleiner oder gleich N ist und $r_i$ eine Abwärtsstrecken-Schedulingrate des i-ten UE angibt.

**11.** Zeitbereichs-Störungskoordinationsverfahren nach einem der Ansprüche 7 bis 10, wobei die Last der Makrozelle Folgendes umfasst:

> mittlere Ressourcenblock- bzw. RB-Auslastung der Makrozelle oder eine Quantität von Benutzern der Makrozelle; und
> dass die Last der Makrozelle, die größer oder gleich der Lastschwelle ist, Folgendes umfasst: die mittlere RB-Auslastung der Makrozelle, die größer oder gleich einer Schwelle der mittleren RB-Auslastung ist, oder die Quantität von Benutzern der Makrozelle, die größer oder gleich einer Benutzerquantitätsschwelle ist.

**12.** Zeitbereichs-Störungskoordinationsverfahren nach einem der Ansprüche 7 bis 11, wobei die Netzvorrichtung Folgendes umfasst: eine Makrobasisstation, zu der die Makrozelle gehört; oder
eine zentralisierte Steuerung, wobei die zentralisierte Steuerung ausgelegt ist zum Steuern der Makrobasisstation und einer Mikrobasisstation, zu der die Mikrozelle gehört.

**Revendications**

**1.** Dispositif de réseau, le dispositif de réseau comprenant :

une première unité d'acquisition (602), configurée pour : quand la charge d'une macrocellule est supérieure ou égale à un seuil de charge, ou quand une temporisation atteint un temps prédéfini de système, acquérir un premier paramètre de proportion de sous-trame de sous-trame presque vide, ABS, de la macrocellule et au moins un paramètre d'expansion de portée de cellule, CRE, dans lequel l'au moins un paramètre CRE est un paramètre CRE de la macrocellule et d'au moins une microcellule, et l'au moins une microcellule est une microcellule dans une zone de couverture de la macrocellule ; et
une première unité de configuration (603), configurée pour configurer le premier paramètre de proportion de sous-trame ABS de la macrocellule et configurer l'au moins un paramètre CRE de la macrocellule et de l'au moins une microcellule conformément au premier paramètre de proportion de sous-trame ABS et de l'au moins un paramètre CRE qui sont acquis par la première unité d'acquisition (602) ;
**caractérisé en ce que** la première unité d'acquisition (602) est configurée pour :

> traverser K paramètres de proportion de sous-trame ABS et L paramètres CRE, pour acquérir le premier paramètre de proportion de sous-trame ABS et l'au moins un paramètre CRE qui correspondent à une capacité de système maximum, dans lequel la capacité de système est la capacité totale de N équipements utilisateurs, UE, K est un entier supérieur ou égal à 1, L est un entier supérieur ou égal à 1, et N est un entier supérieur ou égal à 1.

**2.** Dispositif de réseau selon la revendication 1, comprenant en outre :

> une seconde unité d'acquisition (604), configurée pour : avant que la première unité de configuration (603) configure le premier paramètre de proportion de sous-trame ABS de la macrocellule et configure l'au moins un paramètre CRE de la macrocellule et de l'au moins une microcellule, acquérir un rapport de signal sur interférence plus bruit, SINR, obtenu après qu'un premier équipement utilisateur, UE, est adsorbé dans une première microcellule, dans lequel la première microcellule appartient à l'au moins une microcellule, le premier UE appartient aux N UE dans la macrocellule et l'au moins une microcellule ;
> et
> une seconde unité de configuration (605), configurée pour : si le SINR acquis par la seconde unité d'acquisition (604) est inférieur à un seuil de démodulation qui existe quand un plan de modulation et de codage, MCS, du premier UE est d'ordre zéro, configurer une valeur de décalage d'un paramètre d'expansion de portée, RE, du premier UE à 0 dB.

3. Dispositif de réseau selon la revendication 1, dans lequel la première unité d'acquisition (602) est configurée pour :

traverser les K paramètres de proportion de sous-trame ABS et les L paramètres CRE, pour acquérir une valeur maximum de valeurs d'une première fonction utilitaire de taux d'ordonnancement de liaison descendante des N UE, et acquérir le premier paramètre de proportion de sous-trame ABS et l'au moins un paramètre CRE conformément à la valeur maximum des valeurs de la première fonction utilitaire.

4. Dispositif de réseau selon la revendication 3, dans lequel la première unité d'acquisition (602) est configurée pour :

traverser les K paramètres de proportion de sous-trame ABS et les L paramètres CRE, pour acquérir la valeur maximum des valeurs de la première fonction utilitaire des taux d'ordonnancement de liaison descendante des N UE, dans lequel la première fonction utilitaire comprend :

$$\sum_{i \in N} \log(r_i),$$ dans lequel i indique un numéro de séquence d'UE, i est un entier supérieur ou égal à 1 et inférieur ou égal à N, et $r_i$ indique un taux d'ordonnancement de liaison descendante de l'$i^{ème}$ UE, et acquérir le premier paramètre de proportion de sous-trame ABS et l'au moins un paramètre CRE conformément à la valeur maximum des valeurs de la première fonction utilitaire.

5. Dispositif de réseau selon l'une quelconque des revendications 1 à 4, dans lequel la première unité d'acquisition (602) est configurée pour : quand la charge de la macrocellule est supérieure ou égale au seuil de charge, ou quand la temporisation atteint le temps prédéfini de système, acquérir le premier paramètre de proportion de sous-trame ABS et l'au moins un paramètre CRE, dans lequel la charge de la macrocellule comprend : une utilisation de blocs de ressources, RB, moyenne de la macrocellule ou une quantité d'utilisateurs de la macrocellule ; et la charge de la macrocellule étant supérieure ou égale au seuil de charge comprend : l'utilisation RB moyenne de la macrocellule étant supérieure ou égale à un seuil d'utilisation RB moyenne, ou la quantité d'utilisateurs de la macrocellule étant supérieure ou égale à un seuil de quantité d'utilisateurs.

6. Dispositif de réseau selon l'une quelconque des revendications 1 à 5, dans lequel le dispositif de réseau comprend : une macrostation de base à laquelle appartient la macrocellule ; ou un contrôleur centralisé, dans lequel le contrôleur centralisé est configuré pour commander la macrostation de base et une microstation de base à laquelle appartient la microcellule.

7. Procédé de coordination d'interférences de domaine temporel, le procédé comprenant

quand la charge d'une macrocellule est supérieure ou égale à un seuil de charge, ou quand une temporisation atteint un temps prédéfini de système, l'acquisition (201), par un dispositif de réseau, d'un premier paramètre de proportion de sous-trame de sous-trame presque vide, ABS, de la macrocellule et au moins un paramètre d'expansion de portée de cellule, CRE, dans lequel l'au moins un paramètre CRE est un paramètre CRE de la macrocellule et d'au moins une microcellule, et l'au moins une microcellule est une microcellule dans une zone de couverture de la macrocellule ; et la configuration (202), par le dispositif de réseau, du premier paramètre de proportion de sous-trame ABS de la macrocellule et la configuration de l'au moins un paramètre CRE de la macrocellule et de l'au moins une microcellule ; **caractérisé en ce que** l'acquisition, par le dispositif de réseau, du premier paramètre de proportion de sous-trame ABS et de l'au moins un paramètre CRE comprend :

la traversée, par le dispositif de réseau, de K paramètres de proportion de sous-trame ABS et de L paramètres CRE, pour acquérir le premier paramètre de proportion de sous-trame ABS et l'au moins un paramètre CRE qui correspondent à une capacité de système maximum, dans lequel la capacité de système est la capacité totale de N équipements utilisateurs, UE, K est un entier supérieur ou égal à 1, L est un entier supérieur ou égal à 1, et N est un entier supérieur ou égal à 1.

8. Procédé de coordination d'interférences de domaine temporel selon la revendication 7, le procédé comprenant en outre avant la configuration, par le dispositif de réseau, du premier paramètre de proportion de sous-trame ABS de la macrocellule et la configuration de l'au moins un paramètre CRE de la macrocellule et de l'au moins une microcellule :

l'acquisition, par le dispositif de réseau, d'un rapport de signal sur interférence plus bruit, SINR, obtenu après qu'un premier équipement utilisateur, UE, est adsorbé dans une première microcellule, dans lequel la première microcellule appartient à l'au moins une microcellule, le premier UE appartient aux N UE dans la macrocellule et l'au moins une microcellule ; et
si le SINR est inférieur à un seuil de démodulation qui existe quand un plan de modulation et de codage, MCS, du premier UE est d'ordre zéro, la configuration, par le dispositif de réseau, d'une valeur de décalage d'un paramètre d'expansion de portée, RE, du premier UE à 0 dB.

9. Procédé de coordination d'interférences de domaine temporel selon la revendication 7, dans lequel la traversée, par le dispositif de réseau, de K paramètres de proportion de sous-trame ABS et de L paramètres CRE, pour acquérir le premier paramètre de proportion de sous-trame ABS et l'au moins un paramètre CRE qui correspondent à une capacité de système maximum, comprend :

la traversée des K paramètres de proportion de sous-trame ABS et des L paramètres CRE, pour acquérir une valeur maximum de valeurs d'une première fonction utilitaire de taux d'ordonnancement de liaison descendante des N UE ; et
l'acquisition du premier paramètre de proportion de sous-trame ABS et de l'au moins un paramètre CRE conformément à la valeur maximum des valeurs de la première fonction utilitaire.

10. Procédé de coordination d'interférences de domaine temporel selon la revendication 9, dans lequel la première fonction utilitaire comprend :

$$\sum_{i \in N} \log(r_i),$$ dans lequel i indique un numéro de séquence d'UE, i est un entier supérieur ou égal à 1 et inférieur ou égal à N, et $r_i$ indique un taux d'ordonnancement de liaison descendante de l'$i^{ème}$ UE.

11. Procédé de coordination d'interférences de domaine temporel selon l'une quelconque des revendications 7 à 10, dans lequel la charge de la macrocellule comprend :

une utilisation de blocs de ressources, RB, moyenne de la macrocellule ou une quantité d'utilisateurs de la macrocellule ; et
la charge de la macrocellule étant supérieure ou égale au seuil de charge comprend : l'utilisation RB moyenne de la macrocellule étant supérieure ou égale à un seuil d'utilisation RB moyenne, ou la quantité d'utilisateurs de la macrocellule étant supérieure ou égale à un seuil de quantité d'utilisateurs.

12. Procédé de coordination d'interférences de domaine temporel selon l'une quelconque des revendications 7 à 11, dans lequel le dispositif de réseau comprend :

une macrostation de base à laquelle appartient la macrocellule ; ou
un contrôleur centralisé, dans lequel le contrôleur centralisé est configuré pour commander la macrostation de base et une microstation de base à laquelle appartient la microcellule.

100

105d

103j

101b

102g

102f

101a

103i

102e

104c

102d

105b

103f

103e

102h

102b

104a

103a

101c

102a

103b

102c

103g

103h

103d

104b

103c

105a

102i

105c

FIG. 1

When load of a macro cell is greater than or equal to a load threshold, or when a timer satisfies a system preset time, a network device acquires a first ABS subframe proportion parameter of the macro cell and at least one CRE parameter — 201

The network device configures the first ABS subframe proportion parameter for the macro cell, and configures the at least one CRE parameter for the macro cell and at least one micro cell — 202

FIG. 2

When load of a macro cell is greater than or equal to a load threshold, or when a timer satisfies a system preset time, the network device traverses K ABS subframe proportion parameters and L CRE parameters, to acquire a first ABS subframe proportion parameter of the macro cell and at least one CRE parameter that correspond to maximum system capacity, where the system capacity is total capacity of the N UEs, K is an integer greater than or equal to 1, and L is an integer greater than or equal to 1 — 301

The network device configures the first ABS subframe proportion parameter for the macro cell, and configures the at least one CRE parameter for the macro cell and at least one micro cell — 302

FIG. 3

The network device acquires a signal to interference plus noise ratio SINR, which exists after first user equipment UE is adsorbed into a first micro cell, of the first user equipment, where the first micro cell belongs to the at least one micro cell, the first UE belongs to N UEs in the macro cell and the at least one micro cell, and N is an integer greater than or equal to 1 — 401

If the SINR is less than a demodulation threshold that exists when a modulation and coding scheme of the first UE is zeroth order, the network device configures 0 dB as an offset value of a range expansion parameter of the first UE — 402

FIG. 4

501

The network device traverses M ABS subframe proportion parameters, to acquire a maximum value of a second utility function of downlink scheduling priorities of Y UEs, where the Y UEs are UEs in the macro cell and the at least one micro cell, M is an integer greater than or equal to 1, and Y is an integer greater than or equal to 1

502

The network device acquires, according to the maximum value of values of the second utility function, a second ABS subframe proportion parameter that corresponds to the maximum value of the values of the second utility function

503

The network device configures the second ABS subframe proportion parameter for the macro cell

FIG. 5

602       601       603

Network device

First acquiring unit — First configuration unit

FIG. 6

FIG. 7

FIG. 8

**EP 3 024 270 B1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20130084865 A1